# EUROPÄISCHE PATENTSCHRIFT

(11) **EP 0 648 919 B1**
(45) Veröffentlichungstag und Bekanntmachung des Hinweises auf die Patenterteilung: **23.12.1998**
(21) Anmeldenummer: 94115162.3
(22) Anmeldetag: 27.09.1994
(51) Int. Cl.: F02C 3/26, F02C 3/34, F01K 23/10

(54) **Verfahren und Vorrichtung zur Erzeugung von Gasen zum Betreiben einer Gasturbine in einem kombinierten Gas- und Dampfkraftwerk**
Process and system for the production of gas for operating a gas turbine in a combined power plant
Procédé et dispositif pour la production de gaz pour opérer une turbine à gaz d'une centrale combinée

(30) Priorität: 15.10.1993 DE 4335136
(43) Veröffentlichungstag der Anmeldung: 19.04.1995
(73) Patentinhaber: ALSTOM Energy Systems GmbH, 70329 Stuttgart (DE)
(72) Erfinder: Leithner, Reinhard, Prof. Dr., D-38124 Braunschweig (DE)

(56) Entgegenhaltungen:
- DE-A- 2 733 029
- DE-A- 3 506 102
- DE-B- 1 240 338
- DE-C- 3 731 082

## Beschreibung

Die Erfindung betrifft ein Verfahren und eine Vorrichtung zur Erzeugung von Gasen zum Betreiben einer Gasturbine in einem kombinierten Gas- und Dampfturbinenkraftwerk, bei dem feinkörnige bis staubförmige Kohle unter einem Druck > 1 bar sowie einer Temperatur > 1000 °C mit einem Oxidationsmittel zu einem Verbrennungsgas verbrannt wird, das im wesentlichen aus CO₂ und Wasserdampf und bei Verwendung von Luft als Oxidationsmittel auch aus Stickstoff besteht.

Derartige Anlagen sind u.a. durch die Zeitschrift VGB Kraftwerkstechnik (70) 1990, Heft 5, Seite 399-405 bekanntgeworden. Die erzeugten Gase enthalten schädliche Stoffe, die die Gasturbine beschädigen würden, daher ist eine Gasreinigung unbedingt erforderlich. Da eine wirksame Reinigung solcher heißen, schadstoffbeladenen Gase mit Temperaturen oberhalb der zulässigen Eintrittstemperaturen moderner Gasturbinen also > 1200 °C kaum durchführbar ist, muß die Temperatur der Gase auf ein Niveau von ca. 650-950 °C gesenkt werden, um die Gasreinigung mit bekannten und erprobten Methoden durchführen zu können. Dieses Temperaturniveau ist insbesondere auch für das Trockenadditivverfahren (Entschwefeln durch Kalkstaubeindüsung) und das Selectiv Noncatalytic Reduction-SNCR-Verfahren (Reduktion der Stickoxide mit Ammoniak ohne Katalysator) entscheidend. Um dieses Temperaturniveau zu erreichen, wird im allgemeinen Wärme an einen Dampfkraftprozeß ausgekoppelt oder ein sehr hoher Luftüberschuß gefahren.

Nachteilig ist bei diesen bekannten Verfahren, Wärme an einen Dampfprozeß auszukoppeln oder einen hohen Luftüberschuß zu fahren, die Wirkungsgradeinbuße durch die Wärmeübertragung auf den Dampfprozeß mit relativ niedriger Temperatur bzw. durch die verminderte Gasturbineneintrittstemperatur bei hohem Luftüberschuß und die erhöhten Abgasverluste. Ferner ist die Verkoppelung von Gasturbinen- und Abhitzekesselbetrieb nachteilig.

Aus DE-OS 27 33 029 ist eine Anlage zur Energiegewinnung aus festen, fossilen und insbesondere ballastreichen Brennstoffen, insbesondere Steinkohle bekannt geworden. In der aus wenigstens einem Block bestehenden Anlage werden die festen Brennstoffe zu Gas umgewandelt und in einer Gasturbine sowie einer Dampfturbine Energie aus dem Gas gewonnen. Dabei werden die bei der Verbrennung des Brennstoffes in einem- Schmelzkammerkessel mit Druckfeuerung frei werdenden heißen Rauchgase durch Wärmeabgabe an einen Dampfkreislauf innerhalb des Schmelzkammerkessels und durch einen hinter dem Kessel angeordneten Gas-Gas-Wärmetauscher, in dem Wärme an kaltes, gereinigtes Rauchgas abgegeben wird, abgekühlt. Das derart abgekühlte Rauchgas wird anschließend in einer Gasreinigungsanlage entstaubt und entschwefelt und nach der Reinigung und Wiederaufwärmung im Gas-Gas-Wärmetauscher der Gasturbine zugeführt. Wahlweise kann durch das heiße Rauchgas auch das Speisewasser des Abhitzedampferzeugers erwärmt werden.

Nachteilig zeigt sich bei dieser Anlage, daß durch die Auskopplung von Verbrennungswärme aus dem Verbrennungsabgas (Rauchgas) an den Wasser/Dampf-Kreislauf im Schmelzkammerkessel niedrigere Rauchgastemperaturen am Schmelzkammerkessel-Austritt und demzufolge niedrigere Gasturbinen-Eintrittstemperaturen nach dem Gas-Gas-Wärmetauscher resultieren. Die Gasturbine kann entsprechend dem offenbarten Stand der Technik nur mit einer Gasturbineneintrittstemperatur von z. B. 851 °C betrieben werden.

Durch die Verwendung von Wasserdampf zur Aufsättigung und Abkühlung des Rauchgases in der Gasreinigungsanlage hinter dem Gas-Gas-Wärmetauscher wird der Wirkungsgrad der Anlage weiter verschlechtert.

Zufolge der Klimadiskussion, des Umweltschutzes und der Ressourcenschonung hat die nicht unbeträchtliche Erhöhung des Wirkungsgrades durch das vorgeschlagene Verfahren und die vorgeschlagene Vorrichtung gerade in den letzten Jahren große Bedeutung gewonnen.

Aufgabe der Erfindung ist es, ein Verfahren der eingangs beschriebenen Art sowie die zugehörige Vorrichtung zu schaffen, bei der die geschilderten Nachteile vermieden werden und eine entscheidende Verbesserung des Wirkungsgrades bei der Erzeugung elektrischen Stromes aus Kohle erzielt wird.

Die vorstehend genannte Aufgabe wird durch ein Verfahren mit den Merkmalen des Patentanspruches 1 sowie durch eine Vorrichtung mit den kennzeichnenden Merkmalen des Patentanspruches 10 gelöst.

Vorteilhafte Ausgestaltungen der Erfindung sind den Unteransprüchen zu entnehmen.

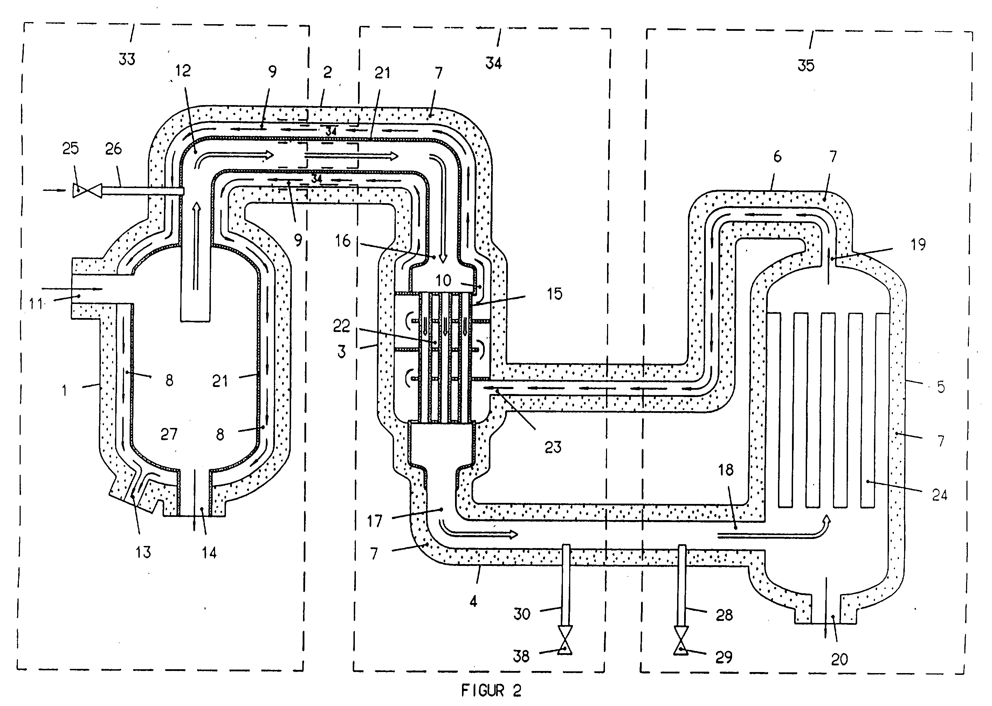

Durch die erfindungsgemäßen Maßnahmen werden die folgenden Vorteile gegenüber dem bekannten Stand der Technik erzielt:
1) Höhere Reingastemperaturen (1200-1400 °C) können erzielt werden, so daß Gasturbinen mit höheren Eintrittstemperaturen und entsprechend höherem Wirkungsgrad betrieben werden können.
2) Die für die Gasreinigung benötigte, gegenüber der zulässigen Eintrittstemperatur der Gasturbine niedrigere, Temperatur (650-950 °C) wird ausschließlich durch Rohgas-Reingaswärmeaustausch und Zumischung eines Kühlgases, bestehend aus rezirkuliertem Abgas oder einem Gas ähnlich dem Oxidationsmittel, ohne Auskopplung von Wärme an den Abhitzekessel erreicht; dadurch wird die gesamte Brennstoffleistung in der Gasturbine genutzt und die Wärmeverluste sind gegenüber dem Stand der Technik geringer. Der Wirkungsgrad der Gesamtanlage wird verbessert.
3) Die Gasturbine kann über einen eigenen Schomstein unabhängig vom Abhitzekessel betrieben werden, weil keine Verkopplung mit dem Abhitzedampferzeuger vorhanden ist außer über die Gasturbinenabgase.
4) Die ohnehin benötigte Innenisolierung der Druckbehälter und Verbindungsleitungen wird gleichzeitig als Wärmetauscher verwendet und die Temperatur der Druckbehälter und Verbindungsleitungswände bei gleicher Isolierungsstärke vermindert. Unter Umständen kann auf einen getrennten Wärmetauscher (Pos. 15 in Figur 2) verzichtet werden.

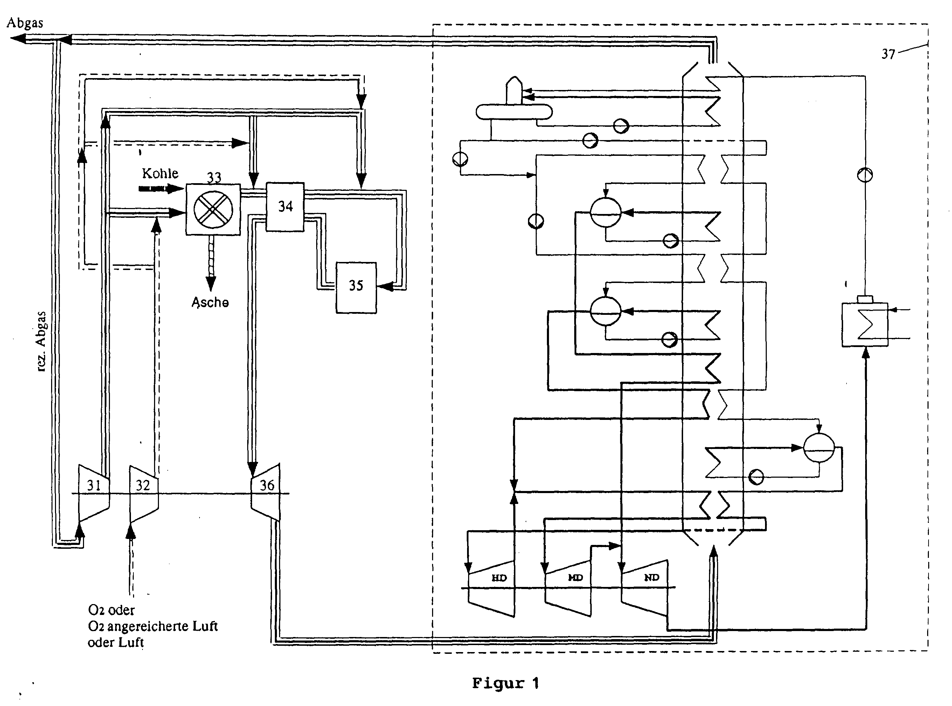

Die Erfindung ist anhand der Beschreibung und der Figuren 1 und 2 näher erläutert.

Figur 1 zeigt ein kombiniertes Gas- und Dampfturbinenkraftwerk, das die Anlagenkomplexe 31-37, nämlich Verdichter 31 für Abgas, Verdichter 32 für Oxidationsmittel, Verbrennungsteil 33, Wärmetauscherteil 34, Gasreinigungsteil 35, Gasturbine mit Generator 36 und Abhitzedampferzeuger samt Dampfturbine und Generator 37 umfaßt.

Figur 2 zeigt die Anlagenkomplexe 33, 34 und 35 wobei feinkörnige bis staubförmige Kohle unter Druck, z.B. 15 bar, zusammen mit einem Oxidationsmittel allein oder mit rezirkuliertem Abgas gemischt einem Verbrennungsraum 27 über einen Brennstoff-, Oxidationsmittel- und Abgasrezirkulationseintritt 11 zugeführt und in diesem verbrannt wird.

Das Oxidationsmittel kann entweder Luft oder mit Sauerstoff angereicherte Luft oder reiner Sauerstoff sein. Die Verbrennung findet dabei entweder bei einer Temperatur statt, bei der die Asche fest bleibt oder schmelzflüssig abgezogen werden kann. Die Verbrennungstemperatur kann durch die Wahl des Luft- und/oder Sauerstoffüberschusses und/oder der Abgasrezirkulation eingestellt werden. Der Verbrennungsraum 27 ist zyklonartig, wodurch ein Großteil der Asche abgeschieden und über den Ascheaustrittsstutzen 14 abgezogen werden kann. Liegt die Verbrennungstemperatur in dem Verbrennungsraum 27 über dem Ascheschmelzpunkt, so wird das Verbrennungsgas am Rohgasaustritt 12 des Verbrennungsraums 27 durch Zumischung über den Stutzen 26 von rezirkuliertem Abgas oder einem Gas ähnlich dem Oxidationsmittel auf eine Temperatur unter dem Ascheschmelzpunkt abgekühlt, um Verschlackungen der nachfolgenden Leitung und des Wärmetauschers zu vermeiden. Anschließend strömt das Verbrennungsgas = Rohgas in beiden Fällen (feste oder schmelzflüssige Asche in dem Verbrennungsraum) durch die als Wärmetauscher ausgebildete erste Verbindungsleitung 2 und - falls nötig - über den Rohgaseintritt 16 eines Wärmetauscher-Druckbehälters 3 durch den Wärmetauscher 15, der in dem Heizflächenraum 22 des Wärmetauscher-Druckbehälters 3 zur Abkühlung des Rohgases und zur Aufheizung des Reingases angeordnet ist.

Das Rohgas verläßt den Wärmetauscher-Druckbehälter 3 über den Rohgasaustritt 17 und strömt über die mit nur einer Isolierung 7 versehene zweite Verbindungsleitung 4 und über den Rohgaseintritt 18 in den Gasreinigungs-Druckbehälter 5 eines Gasreinigungsteiles 35, wobei dem durch die Wärmeabgabe an das Reingas bereits abgekühlten Rohgas über den Stutzen 30 rezirkuliertes Abgas oder ein Gas ähnlich dem Oxidationsmittel zugemischt wird, so daß es auf eine Temperatur zwischen 650 bis 950 °C abgekühlt wird. Bei dieser Temperatur kann das Rohgas mit bekannten Verfahren, wie. z.B. Zyklonen, keramische Filterkerzen 24 etc. entstaubt werden (einschließlich Alkalimetallverbindungen) und femer durch ebenfalls bekannte Methoden, z.B. Trockenadditivverfahren, d.h. durch Eindüsen von Kalkstaub entschwefelt bzw. z.B. durch das Selective Noncatalytic Reduction SNCR-Verfahren, d.h. durch Eindüsen von Ammoniak von Stickoxiden befreit werden. Diese Gasreinigungsverfahren sind in dem Gasreinigungs-Druckbehälter 5 des Gasreinigungsteils 35 angeordnet, aus dem über den Austritt 20 Flugasche und andere Reststoffe wie z.B. Gips abgezogen werden können. Die Zuführung der Additive erfolgt über den Stutzen zur Additivzufuhr 28. Anschließend strömt das gereinigte Verbrennungsgas = Reingas über den Reingasaustritt 19 des Gasreinigungs-Druckbehälters 5 und die nur mit einer Isolierung 7 versehene dritte Verbindungsleitung 6 und den Reingaseintritt 23 zurück zum Wärmetauscher-Druckbehälter 3. Das Reingas durchströmt dann - falls benötigt - den Wärmetauscher 15, und/oder die als Wärmetauscher ausgebildeten, hintereinander verbundenen Kanäle 10, 9 und 8, wobei der dritte Kanal 10 im Wärmetauscherdruckbehälter 3, der zweite Kanal 9 in der ersten Verbindungsleitung 2 und der erste Kanal 8 im Brennkammerdruckbehälter 1 liegt. Das Reingas nimmt dabei von dem ungereinigten Verbrennungsgas = Rohgas Wärme auf und verläßt den Brennkammerdruckbehälter über den Reingasaustritt 13 mit der zulässigen Eintrittstemperatur der Gasturbine 36. Das Reingas durchströmt dann nacheinander die Gasturbine 36 in Figur 1 und den Abhitzedampferzeuger 37 in Figur 1, in dem Wasser zum Betreiben einer Dampfturbine auf einer oder mehreren Druckstufen (in Figur 1 ist eine mögliche Schaltung mit 3 Druckstufen dargestellt) vorgewärmt, verdampft und überhitzt wird. Es könnte auch Wärme für Heizzwecke ausgekoppelt werden.

Nach dem Abhitzekessel kann ein Teil des Abgases über einen von der Gasturbine 36 angetriebenen Kompressor 31, siehe Figur 1, an die oben angeführten Stutzen bzw. Eintritte 11, 26 und 30 rezirkuliert werden. Der Rest kann - falls dies erforderlich bzw. noch nicht geschehen ist - in bekannter Weise auf zulässige Emissionswerte gereinigt werden und verläßt das Kraftwerk über einen Schornstein. Wenn als Oxidationsmittel reiner Sauerstoff verwendet wird, entstehen als Abgase - wie bereits erwähnt - ein Gasgemisch, das fast nur aus CO₂ und Wasserdampf besteht. Bei entsprechender weiterer Abkühlung kondensiert zuerst Wasserdampf aus und schließlich wird auch das CO₂ mit den restlichen Gasspuren flüssig bzw. gefriert zu Eis. Dadurch entsteht ein abgasfreies Kraftwerk, wenn man von dem bei der Sauerstoffgewinnung aus Luft abgetrennten Stickstoff absieht. Von der Gasturbine 36 - siehe Figur 1 - wird außerdem der Verdichter 32 für das Oxidationsmittel - siehe Figur 1 - angetrieben.

Der Brennkammerdruckbehälter 1, die erste Verbindungsleitung 2 und der Wärmetauscherdruckbehälter 3 sind so aufgebaut, daß die druckaufnehmende Wand außen liegt. Nach innen folgen der Reihe nach: Isolierung 7, hintereinander verbundene Kanäle 8, 9 und 10, in denen Reingas strömt, und eine wärmeleitende, weitgehend gasundurchlässige und feuerfeste Auskleidung 21. Erst innerhalb dieser Auskleidung 21 strömt Rohgas.

### Legende

- 1: Brennkammer- bzw. Verbrennungsraum-Druckbehälter
- 2: Erste Verbindungsleitung
- 3: Wärmetauscher-Druckbehälter
- 4: Zweite Verbindungsleitung
- 5: Gasreinigungs-Druckbehälter
- 6: Dritte Verbindungsleitung
- 7: Wärmeisolierung
- 8: Erster Kanal
- 9: Zweiter Kanal
- 10: Dritter Kanal
- 11: Brennstoff- und Oxidationsmittel und Abgasrezirkulationseintritt
- 12: Rohgasaustritt
- 13: Reingasaustritt
- 14: Ascheaustrittsstutzen
- 15: Wärmetauscher
- 16: Rohgaseintritt
- 17: Rohgasaustritt
- 18: Rohgaseintritt
- 19: Reingasaustritt
- 20: Flugasche - (eventuell mit Gips) Austritt
- 21: innere wärmeleitende weitgehend gasdichte und feuerfeste Auskleidung (Wand) in 1, 2 und 3 über die ein Wärmeaustausch zwischen Roh- und Reingas erfolgt
- 22: Heizflächenraum
- 23: Reingaseintritt
- 24: Filter
- 25: Absperrorgan
- 26: Stutzen (zur Zufuhr von rezirkuliertem Abgas oder einem Gas ähnlich dem Oxidationsmittel)
- 27: Verbrennungsraum
- 28: Stutzen zur Additivzufuhr (z.B. Kalkstaub, Ammoniak)
- 29: Absperrorgan
- 30: Stutzen (zur Zufuhr von rezirkuliertem Abgas oder einem Gas ähnlich dem Oxidationsmittel)
- 31: Verdichter für Abgas
- 32: Verdichter für Oxidationsmittel
- 33: Verbrennungsteil
- 34: Wärmetauscherteil (als Wärmetauscher ausgebildete Behälter- und Verbindungsleitungswände und - falls nötig - Wärmetauscher)
- 35: Gasreinigungsteil
- 36: Gasturbine mit Generator
- 37: Abhitzedampferzeuger samt Dampfturbinen und Generator
- 38: Absperrorgan

## Patentansprüche

1. Verfahren zur Erzeugung von Gasen zum Betreiben einer Gasturbine (36) in einem kombinierten Gas- und Dampfturbinenkraftwerk, bei dem feinkörnige bis staubförmige Kohle unter einem Druck > 1 bar sowie einer Temperatur > 1000 °C mit einem Oxidationsmittel in einem Verbrennungsraum (27) zu einem Verbrennungsgas = Rohgas verbrannt wird, das im wesentlichen aus CO₂ und Wasserdampf und bei Verwendung von Luft als Oxidationsmittel auch aus Stickstoff besteht,
wobei das aus dem Verbrennungsraum (27) strömende Rohgas Wärme an ein Reingas abgibt und dadurch und durch anschließende Zumischung von einem rezirkuliertem Abgas oder einem Gas ähnlich dem Oxidationsmittel auf 650-950 °C abgekühlt und bei dieser Temperatur zumindest von Staub einschließlich Alkalimetallverbindungen gereinigt wird, worauf
das aus dem Rohgas gebildete Reingas durch Wärmeaufnahme vom Rohgas auf die zulässige Eintrittstemperatur der Gasturbine (36) wieder aufgewärmt wird,
und anschließend hintereinander die Gasturbine (36) und einen Abhitzedampferzeuger (37) durchströmt, in dem Wasser zum Betreiben einer Dampfturbine auf mindestens einer Druckstufe vorgewärmt, verdampft und überhitzt wird.

2. Verfahren nach Anspruch 1, dadurch gekennzeichnet, daß das Oxidationsmittel Luft ist.

3. Verfahren nach Anspruch 1, dadurch gekennzeichnet, daß das Oxidationsmittel mit Sauerstoff angereicherte Luft ist.

4. Verfahren nach Anspruch 1, dadurch gekennzeichnet, daß das Oxidationsmittel reiner Sauerstoff ist.

5. Verfahren nach einem der vorgenannten Ansprüche, dadurch gekennzeichnet, daß dem jeweiligen Oxidationsmittel rezirkuliertes Abgas zugemischt wird.

6. Verfahren nach einem der vorgenannten Ansprüche, dadurch gekennzeichnet, daß die Verbrennung in dem Verbrennungsraum (27) durch entsprechenden Luft- und/oder Sauerstoffüberschuß und/oder Abgasrezirkulation bei einer Temperatur oberhalb der Eintrittstemperatur der Gasturbine (36) und unterhalb des Ascheschmelzpunktes der Kohle durchgeführt wird, so daß die Asche staubförmig über einen Ascheaustrittsstutzen (14) abgezogen werden kann.

7. Verfahren nach einem der Ansprüche 1 bis 5, dadurch gekennzeichnet, daß die Verbrennung in dem Verbrennungsraum (27) bei einer Temperatur stattfindet, daß die Asche der Kohle schmelzflüssig über den Ascheaustrittsstutzen (14) abgezogen und das Verbrennungsgas am Rohgasaustritt (12) aus dem Verbrennungsraum (27) durch Zumischung von einem rezirkuliertem Abgas oder einem Gas ähnlich dem Oxidationsmittel über einen Stutzen (26) auf eine Temperatur unterhalb des Ascheschmelzpunktes der Kohle aber oberhalb der zulässigen Eintrittstemperatur der Gasturbine (36) abgekühlt wird.

8. Verfahren nach einem der vorgenannten Ansprüche, dadurch gekennzeichnet, daß das Rohgas zusätzlich von SO₂ und/oder NOₓ gereinigt wird.

9. Verfahren nach einem der vorgenannten Ansprüche, dadurch gekennzeichnet, daß die zulässige Eintrittstemperatur der Gasturbine (36) > 1200 °C beträgt.

10. Vorrichtung zur Durchführung des Verfahrens nach einem der Ansprüche 1 bis 9, dadurch gekennzeichnet, daß sie aus einem Verbrennungsteil (33) besteht, die durch einen Brennkammerdruckbehälter (1) mit einem Verbrennungsraum (27) gebildet ist, dessen Rohgasaustritt (12) mittels einer ersten Verbindungsleitung (2) mit dem Rohgaseintritt (16) eines Wärmetauscher-Druckbehälters (3) eines Wärmetauscherteiles (34) verbunden ist, dessen Rohgasaustritt (17) mittels einer zweiten Verbindungsleitung (4), in die ein Stutzen (30) einmündet, mit dem Rohgaseintritt (18) eines Gasreinigungs-Druckbehälters (5) eines Gasreinigungsteils (35) verbunden ist, dessen Reingasaustritt (19) mittels einer dritten Verbindungsleitung (6) mit dem Reingaseintritt (23) des Wärmetauscher-Druckbehälters (3) verbunden ist, wobei die Innenseiten der Wände aller Druckbehälter (1, 3, 5) und aller Verbindungsleitungen (2, 4, 6) mit einer Wärmeisolierung (7) versehen sind, unter der in dem Brennkammerdruckbehälter (1), in der ersten Verbindungsleitung (2) und in dem Wärmetauscher-Druckbehälter (3) des Wärmetauscherteiles (34) eine Auskleidung (21) angeordnet ist, zwischen der und der Wärmeisolierung (7) hintereinander verbunden ein erster, zweiter und dritter Kanal (8, 9, 10) angeordnet sind, wobei der Reingaseintritt (23) des Wärmetauscher-Druckbehälters (3) in den dritten Kanal (10) mündet, der über den zweiten Kanal (9) und den ersten Kanal (8) und den Reingasaustritt (13) des Brennkammerdruckbehälters (1) mit einer Gasturbine (36) und anschließend mit einem Abhitzedampferzeuger (37) verbunden ist, in dem Wasser zum Betreiben einer Dampfturbine auf mindestens eine Druckstufe vorgewärmt, verdampft und überhitzt wird und wobei die Gasturbine (36) einen Verdichter (32) für das Oxidationsmittel antreibt.

11. Vorrichtung nach Anspruch 10, dadurch gekennzeichnet, daß in dem Wärmetauscher-Druckbehälter (3) des Wärmetauscherteiles (34) ein Heizflächenraum (22) ausgebildet ist, in dem ein den dritten Kanal (10) mit dem Reingaseintritt (23) des Wärmetauscher-Druckbehälters (3) verbindender Wärmetauscher (15) angeordnet ist.

12. Vorrichtung nach Anspruch 10 oder 11, dadurch gekennzeichnet, daß in den Rohgasaustritt (12) ein Stutzen (26) einmündet.

13. Vorrichtung nach einem der Ansprüche 10 bis 12, dadurch gekennzeichnet, daß der Gasreinigungs-Druckbehälter (5) mit einem Filter (24) versehen ist, der als Gewebefilter ausgebildet ist.

14. Vorrichtung nach einem der Ansprüche 10 bis 12, dadurch gekennzeichnet, daß der Gasreinigungs-Druckbehälter (5) mit einem Filter (24) versehen ist, der als Keramikfilter ausgebildet ist.

15. Vorrichtung nach einem der Ansprüche 10 bis 14, dadurch gekennenzeichnet, daß die hintereinander verbundenen Kanäle (8), (9) und (10) jeweils aus mehreren, parallel angeordneten kleinen Kanälen gebildet sind.

16. Vorrichtung nach einem der Ansprüche 10 bis 15, dadurch gekennzeichnet, daß die Auskleidung (21) feuerfest, weitgehend gasundurchlässig und wärmeleitend ausgebildet ist.

17. Vorrichtung nach einem der Ansprüche 10 bis 16 dadurch gekennzeichnet, daß die zweite Verbindungsleitung (4) zum Gasreinigungs-Druckbehälter (5) oder der Gasreinigungs-Druckbehälter (5) mit einem Stutzen (28) zur Additivzufuhr und einem Absperrorgan (29) versehen ist.

18. Vorrichtung nach einem der Ansprüche 10 bis 17, dadurch gekennzeichnet, daß der Verbrennungsraum (27) zyklonartig ausgebildet ist.

19. Vorrichtung nach einem der Ansprüche 10 bis 18, dadurch gekennzeichnet, daß der Gasturbinen-Austritt mit einem eigenen Schornstein verbunden ist, so daß die Gasturbine (36) ohne Abhitzedampferzeuger betrieben werden kann.

20. Vorrichtung nach einem der Ansprüche 10 bis 19, dadurch gekennzeichnet, daß die Gasturbine (36) einen Verdichter (31) für Abgas antreibt.

## Claims

1. Method for generating gases to run a gas turbine (36) in a combined gas and steam turbine power station, in which fine grained to pulverant coal is combusted at a pressure of > 1 bar and a temperature of > 1000 °C with an oxidant in a combustion chamber (27) into a combustion gas = crude gas,
which essentially is composed of CO₂ and water vapour and on using air as the oxidant also nitrogen,
wherein the crude gas flowing out of the combustion chamber (27) emits heat to a pure gas and in this way and by the subsequent addition of a recycled waste gas or a gas similar to the oxidant is cooled to 650-950 °C, and at this temperature is cleaned at least of dust including alkali metal compounds,
whereupon the pure gas formed from the crude gas is reheated by heat from the crude gas to the permissible entry temperature of the gas turbine (36),
and then flows through the gas turbine (36) and a waste heat steam generator (37), in which water for operating a steam turbine is preheated, steamed and overheated by at least one pressure stage.

2. Method according to claim 1, characterised in that the oxidant is air.

3. Method according to claim 1, characterised in that the oxidant is air enriched with oxygen.

4. Method according to claim 1, characterised in that the oxidant is pure oxygen.

5. Method according to one of the preceding claims, characterised in that recycled waste gas is mixed with the respective oxidant.

6. Method according to one of the preceding claims, characterised in that the combustion in the combustion chamber (27) is performed by a corresponding air and/or oxygen excess and/or waste gas recycling at a temperature above the inlet temperature of the gas turbine (36), and below the ash melting point of the coal, so that the ash can be drawn off in dust form via an ash outlet point (14).

7. Method according to one of claims 1 to 5, characterised in that the combustion in the combustion chamber (27) occurs at a temperature at which the ash of the coal is drawn off in molten form via the ash outlet points (14), and the combustion gas at the crude gas outlet (12) from the combustion chamber (27) is cooled by mixing in a recycled waste gas or a gas similar to the oxidant via a connection (26) to a temperature below the ash melting point of the coal but above the permissible inlet temperature of the gas turbine (36).

8. Method according to one of the preceding claims, characterised in that the crude gas is additionally cleaned of SO₂ and/or NOₓ.

9. Method according to one of the preceding claims, characterised in that the permissible inlet temperature of the gas turbine (36) is > 1200 °C.

10. Device for performing the method according to one of claims 1 to 9, characterised in that it comprises a combustion unit (33), which is formed by a combustion chamber pressure tank (1) with a combustion chamber (27), the waste gas outlet (12) of which is connected by a first connection line (2) with the crude gas inlet (16) of a heat exchanger pressure tank (3) of a heat exchanger unit (34), the crude gas outlet (17) of which is connected by a second connection line (4), into which a connection (30) opens, to the crude gas inlet (18) of a gas cleaning pressure tank (5) of a gas cleaning unit (35), the pure gas outlet (19) of which is connected by a third connection line (6) with the pure gas inlet (23) of the heat exchanger pressure tank (3), wherein the insides of the walls of all pressure tanks (1, 3, 5) and all connection lines (2, 4, 6) are provided with heat insulation (7), under which in the combustion chamber pressure tank (1) in the first connection line (2) and in the heat exchanger pressure tank (3) of the heat exchanger unit (34) a lining (21) is arranged, between which and the heat insulation (7) series connected a first, second and third channel (8, 9, 10) are arranged, whereby the pure gas inlet (23) of the heat exchanger pressure tank (3) opens into the third channel (10), which is connected by the second channel (9) and the first channel (8) and the pure gas outlet (13) of the combustion chamber pressure tank (1) with a gas turbine (36) and then with a waste gas steam generator (37), in which water is preheated, steamed and overheated for operating a steam turbine at at least one pressure stage, and whereby the gas turbine (36) drives a compressor (32) for the oxidant.

11. Device according to claim 10, characterised in that in the heat exchanger pressure tank (3) of the heat exchanger unit (34) a heating surface chamber (22) is formed, in which a heat exchanger (15) connecting the third channel (10) with the pure gas inlet (23) of the heat exchanger pressure tank (3) is arranged.

12. Device according to claim 10 or 11, characterised in that a connection (26) opens into the crude gas outlet (12).

13. Device according to one of claims 10 to 12, characterised in that the gas cleaning pressure tank (5) is provided with a filter (24), which is a fabric filter.

14. Device according to one of claims 10 to 12, characterised in that the gas cleaning pressure tank (5) is provided with a filter (24), which is a ceramic filter.

15. Device according to one of claims 10 to 14, characterised in that the series connected channels (8), (9), and (10) are formed respectively from several parallel small channels.

16. Device according to one of claims 10 to 15, characterised in that the lining (21) is fireproof, mainly gas impermeable and heat conducting.

17. Device according to one of claims 10 to 16, characterised in that the second connection line (4) to the gas turbine pressure tank (5) or the gas cleaning pressure tank (5) is provided with a connection (28) for the supply of additives and a blocking device (29).

18. Device according to one of claims 10 to 17, characterised in that the combustion chamber (27) is designed to be like a cyclone.

19. Device according to one of claims 10 to 18, characterised in that the gas turbine outlet is connected with a separate chimney so that the gas turbine (36) can be operated without waste steam generators.

20. Device according to one of claims 10 to 19, characterised in that the gas turbine (36) drives a compressor (31) for waste gas.

## Revendications

1. Procédé de production de gaz pour le fonctionnement d'une turbine à gaz (36) dans une centrale combinée à turbine à gaz et à turbine à vapeur, dans le cas duquel on brûle du charbon, de granulométrie fine à poussiéreuse, sous une pression > 1 bar et à une température > 1000°C avec un agent d'oxydation dans une chambre de combustion (27) pour obtenir un gaz de combustion = gaz brut, qui est essentiellement constitué de CO₂ et de vapeur d'eau ainsi que, en cas d'emploi de l'air comme agent d'oxydation, d'oxygène,
dans lequel le gaz brut qui sort de la chambre de combustion (27) abandonne sa chaleur à un gaz épuré et, de ce fait, et par addition et mélange, venant à la suite, d'un gaz d'échappement recyclé ou d'un gaz semblable à l'agent d'oxydation, est refroidi à 650-950°C et, à cette température, est épuré au moins des poussières, y compris des composés des métaux alcalins, sur quoi
le gaz épuré, formé à partir du gaz brûlé, est à nouveau réchauffé, par réception de la chaleur en provenance du gaz brut, pour être amené à la température d'entrée autorisée dans la turbine à gaz (36), et il parcourt ensuite l'un derrière l'autre la turbine à gaz (36) et un générateur de vapeur sur chaleur perdue (37) dans lequel on préchauffe, on vaporise et on surchauffe l'eau pour le fonctionnement d'une turbine à gaz sur au moins un étage de pression.

2. Procédé selon la revendication 1, caractérisé par le fait que l'agent d'oxydation est l'air.

3. Procédé selon la revendication 1, caractérisé par le fait que l'agent d'oxydation est l'air enrichi en oxygène.

4. Procédé selon la revendication 1, caractérisé par le fait que l'agent d'oxydation est l'oxygène pur.

5. Procédé selon l'une des revendications mentionnée, caractérisé par le fait qu'à l'agent d'oxydation en question on ajoute et mélange du gaz d'échappement recyclé.

6. Procédé selon l'une des revendications mentionnées, caractérisé par le fait que l'on procède à la combustion dans la chambre de combustion (27) au moyen d'un excès d'air et/ou d'un excès d'oxygène approprié et/ou d'un recyclage des gaz d'échappement à une température supérieure à la température d'entrée dans la turbine à gaz (36) mais inférieure au point de fusion des cendres du charbon, de sorte que l'on peut extraire les cendres sous forme pulvérulente par une tubulure (14) d'extraction des cendres.

7. Procédé selon l'une des revendications 1 à 5, caractérisé par le fait que la combustion dans la chambre de combustion (27) se fait à une température telle que l'on extrait les cendres du charbon sous forme d'une masse en fusion par la tubulure (14) d'extraction des cendres et que l'on refroidit les gaz de combustion qui sortent de la combustion (27) à la sortie (12) des gaz brut en ajoutant et mélangeant des gaz d'échappement recyclés ou un gaz semblable à l'agent d'oxydation, par l'intermédiaire d'une tubulure (26) pour porter les gaz de combustion à une température inférieure au point de fusion des cendres du charbon mais supérieure à la température d'entrée autorisée dans la turbine à gaz (36).

8. Procédé selon l'une des revendications mentionnées, caractérisé par le fait que l'on épure en outre les gaz bruts du SO₂ et/ou du NOₓ.

9. Procédé selon l'une des revendications mentionnée, caractérisé par le fait que la température d'entrée autorisée dans la turbine à gaz (36) est > à 1000°C.

10. Dispositif pour la mise en oeuvre du procédé selon l'une des revendications 1 à 9, caractérisé par le fait qu'il est constitué d'une partie de combustion (33) qui est formée par un récipient sous pression (1) formant chambre de combustion, avec une chambre de combustion (27), dont la sortie (12) des gaz bruts est reliée. au moyen d'une première conduite de liaison (2), à l'entrée (16) des gaz bruts d'un récipient sous pression (3), formant échangeur de chaleur, d'une partie (34) formant échangeur de chaleur dont la sortie (17) des gaz bruts est reliée, au moyen d'une seconde conduite de liaison (14), dans laquelle débouche une tubulure (30), à l'entrée (18) des gaz bruts d'un récipient sous pression (5) d'épuration des gaz d'une partie (35) d'épuration des gaz dont la sortie (19) des gaz épurés est reliée, au moyen d'une troisième conduite de liaison (6), à l'entrée (23) des gaz épurés du récipient sous pression (3) formant échangeur de chaleur, dans lequel les faces intérieures des parois de tous les récipients sous pression (1, 3, 5) et de toutes les conduites de liaison (2, 4, 6) sont munies d'un isolant thermique (7) sous lequel, dans le récipient sous pression (1) formant chambre de combustion, dans la première conduite de liaison (2) et dans le récipient sous pression (3) formant échangeur de chaleur de la partie (34) formant échangeur de chaleur, est disposé un garnissage (21), un premier, un second et un troisième canaux (8, 9, 10) étant disposés, reliés l'un derrière l'autre, entre ce garnissage et l'isolant thermique (7), dans lequel l'entrée (23) des gaz épurés du récipient sous pression (3) formant échangeur de chaleur débouche dans le troisième canal (10) qui, par l'intermédiaire du second canal (9) et du premier canal (8) et de la sortie (13) des gaz épurés du récipient sous pression (1) de la chambre de combustion, est relié à une turbine à gaz (36) et ensuite à un générateur de vapeur sur chaleur perdue (37), dans lequel on préchauffe, vaporise et surchauffe, à au moins un étage de pression, l'eau nécessaire pour le fonctionnement d'une turbine à vapeur et dans lequel la turbine à gaz (36) entraîne un compresseur (32) pour l'agent d'oxydation .

11. Dispositif selon la revendication 10, caractérisé par le fait que dans le récipient sous pression (3) formant échangeur de chaleur de la partie (34) formant échangeur de chaleur est prévue une chambre à surface chauffée (22) dans laquelle est disposé un échangeur de chaleur (15) reliant le troisième canal (10) avec l'entrée (23) des gaz épurés du récipient sous pression (3) formant échangeur dc chaleur.

12. Dispositif selon la revendication 10 ou 11, caractérisé par le fait qu'une tubulure (26) débouche dans la sortie (12) des gaz bruts.

13. Dispositif selon l'une des revendications 10 ou 12, caractérisé par le fait que le récipient sous pression (5) d'épuration des gaz est muni d'un filtre (24) conçu sous forme de filtre en tissu.

14. Dispositif selon l'une des revendications 10 à 12, caractérisé par le fait que le récipient sous pression (5) d'épuration des gaz est muni d'un filtre (24) conçu sous forme de filtre céramique.

15. Dispositif selon l'une des revendications 10 à 14, caractérisé par le fait que les canaux (8), (9) et (10), reliés l'un derrière l'autre, sont chacun formés de plusieurs petits canaux disposés parallèlement.

16. Dispositif selon l'une des revendications 10 à 15, caractérisé par le fait que le garnissage (21) est prévu réfractaire, largement imperméable au gaz et conducteur de la chaleur.

17. Dispositif selon l'une des revendications 10 à 16, caractérisé par le fait que la seconde conduite de liaison (4) pour le récipient sous pression (5) d'épuration des gaz ou les récipients sous pression (5) des gaz est munie d'une tubulure (28) pour l'amenée d'un additif ainsi que d'un organe d'arrêt (29).

18. Dispositif selon l'une des revendications 10 à 17, caractérisé par le fait que la chambre de combustion (27) est conçue sous forme de cyclone.

19. Dispositif selon l'une des revendications 10 à 18, caractérisé par le fait que la sortie des turbines à gaz est reliée à une cheminée propre de sorte que l'on peut faire fonctionner la turbine à gaz (36) sans le générateur de vapeur sur chaleur perdue.

20. Dispositif selon l'une des revendications 10 à 19, caractérisé par le fait que la turbine à gaz (36) entraîne un compresseur (31) pour les gaz d'échappement.
